# EUROPEAN PATENT SPECIFICATION

(11) **EP 4 337 370 B1**
(45) Date of publication and mention of the grant of the patent: **21.10.2026**
(21) Application number: 22706969.7
(22) Date of filing: 15.02.2022
(51) Int. Cl.: B01D 61/08, B01D 61/18, B01D 63/04, B01D 65/00

(54) **MULTI-ELEMENT FILTRATION VESSEL**
MEHRTEILIGER FILTRATIONSBEHÄLTER
RÉCIPIENT DE FILTRATION À ÉLÉMENTS MULTIPLES

(30) Priority: 12.05.2021 WO PCT/CN2021/093191
(43) Date of publication of application: 20.03.2024
(60) Divisional application: 25176181.3 / 4 578 534
(73) Proprietor: FilmTec Water USA, LLC, Wilmington, Delaware 19803 (US); Zhejiang Omex Environmental Engineering Co., Ltd., Huzhou, Zhejiang 31300 (CN)
(72) Inventor: JONS, Steven D., Edina, Minnesota 55439 (US); LI, Bie, Huzhou City, Zhejiang, 31300 (CN); HE, Bin, Huzhou City, Zhejiang, 31300 (CN); FAN, Liangzhou, Huzhou City, Zhejiang, 31300 (CN); DAS, Shankhadeep, Edina, Minnesota 55439 (US); CAI, Bill Qixiang, Huzhou City, Zhejiang, 31300 (CN)
(74) Representative: Houghton, Mark Phillip
(86) International application number: PCT/US2022/016405
(87) International publication number: WO 2022/240460

(56) References cited:
- WO-A1-2008/141080
- CN-A- 105 327 621
- US-A1- 2003 075 504
- US-A1- 2015 238 905
- US-B2- 7 988 855

## Description

### Field of the Invention

This invention relates to multi-element filtration vessels.

### Background

Multi-element filtration vessels are used widely in water treatment facilities to purify water, and also as reactors in various chemical manufacturing processes. Semi-permeable membranes are assembled within elements, which are mounted vertically in an array within the vessel. A feed fluid is often fed upwardly through the elements, where it is separated by the membranes into a concentrate and a permeate. An aerating gas is usually introduced into the vessel at a point below the elements. The aerating gas can perform several useful functions. When the membrane is a hollow fiber type, gas bubbles provide buoyancy, assisting with the transfer of the feed fluid between fibers or through the capillaries in the fibers. The aerating gas also can perform a cleaning function, and improve fluid mixing.

One or more supports within the vessel bear the weight of the elements and maintain them in their proper positions. In some cases, the elements are entirely supported and aligned by an upper plate. In other cases, a lower support is used, typically in conjunction with an upper plate. In these latter configurations, the weight of the elements may be borne by the upper plate alone, in which case the lower support performs only an alignment function; alternatively the weight of the elements is borne by the lower plate (with the upper plate providing alignment) or distributed between the upper plate and lower support, with the lower support also serving to align the bottom ends of the elements.

The lower support typically has taken the form of a perforated plate. The lower ends of the elements can align with the perforations so that the feed fluid and aerating gas can pass from below the lower support and into the elements. A problem with this design is that the perforated plate is often quite massive; large multi-element filtration vessels may have diameters of 1.5 meters or greater. The plate must be very rigid and often quite thick to span such a wide diameter. Very large plates are expensive, difficult to transport and assemble into the vessels, and susceptible to deforming under pressure or weight.

Another problem with using a perforated plate as a lower support is that solid materials such as sludge or particles entrained in the feed fluid tend to settle onto the plate over time. These solids are difficult to remove from conventionally-designed vessels because they have to be partially disassembled (such as by removing elements) to be cleaned. It is possible to introduce additional perforations into the lower support plate to allow the solids to sink to the bottom of the vessel, from which they can be more easily drained. However, adding more perforations further weakens the plate, making it more prone to sagging or even breaking.

Relevant prior disclosures include CN105327621A, US2015238905A1, WO2008141080A1, US7988855B2 and US2003075504A1.

### Summary of the Invention

The present invention in its various aspects is as set out in the appended claims.

This invention is in one aspect a multi-element filtration apparatus, the apparatus comprising
a) a pressure vessel; wherein the pressure vessel is cylindrical and suitable for operation with inside pressures exceeding at least two bars, 20000Pa, above an outside pressure,
b) multiple filtration elements, each containing at least one filtration membrane in an interior portion thereof, the multiple filtration elements being disposed substantially vertically within the pressure vessel, the multiple filtration elements each having a bottom end having one or more through-holes that admit a fluid into the interior portion of the filtration element,
c) one or more aerators within the pressure vessel for supplying an aeration gas to the bottom ends of the multiple filtration elements; and
d) a first set of multiple spaced beams mounted on an interior surface of the pressure vessel, the first set of multiple spaced beams being engaged with the bottom ends of the multiple filtration elements such that i) each of the bottom ends is supported by two adjacent spaced beams and extends downwardly between said two adjacent spaced beams, each bottom end by itself or together with the two adjacent spaced beams defining a cavity that provides a feed fluid path for a feed fluid and a gas supplied by the aerator(s) to travel upwardly through the cavity to the through-holes in the bottom end, and ii) fluid passages, separate from the feed fluid paths, extend from above to below each pair of adjacent spaced beams and between the bottom ends of adjacent filtration elements mounted on each pair of adjacent spaced beams.

The lower support design of this invention offers several important advantages. Manufacturing is simplified in many cases because the beams often have a simple geometry. They use less material than the pressure plate, reducing raw material, manufacturing and transportation costs. Transportation is easier because the beams can be shipped separately and assembled into place at the location where the multi-element filtration vessel is to be assembled and used.

The lower support design of the invention also offers operational advantages. Adjacent pairs of beams can act as baffles to direct fluids, and in particular an aeration gas, up to the filtration elements. In addition, gaps between the beams form fluid passages through which sludge and other solids can easily settle down through the lower support to the bottom of the pressure vessel, from which they are easily removed.

### Brief Description of the Drawings

FIGURE 1 is a front view, in section, of an embodiment of a filtration apparatus of the invention.
FIGURE 1A is a side view, in section, of the embodiment of the filtration apparatus shown in FIGURE 1, being rotated 90° about a central vertical axis.
FIGURE 2 is a top sectional view, taken along lines 2-2A of Figure 1, of an embodiment of a filtration apparatus of the invention.
FIGURE 3A is an isometric view of an embodiment of spaced beams mounted on a peripheral support, for use in this invention.
FIGURE 3B is an isometric view of a second embodiment of spaced beams mounted on a peripheral support, for use in this invention.
FIGURE 3C is an isometric view of a third embodiment of spaced beams mounted on a peripheral support, for use in this invention.
FIGURE 4 is a side view of an embodiment of a beam for use in the invention.
FIGURE 5A is front view of a portion of an embodiment of a filtration element for use in the invention.
FIGURE 5B is a front view of a portion of a second embodiment of a filtration element for use in the invention.
FIGURE 6 is a side view, in section, of an embodiment of a filtration element for use in the invention.
FIGURE 7A is an isometric view of an embodiment of a beam with integrated aerator for use in the invention.
FIGURE 7B is a sectional view of the beam with integrated aerator shown in Figure 7A.
FIGURE 8 is a side view, partially in section, showing the operation of a beam with integrated aerator.
FIGURE 9 is a side view, partially in section, showing the operation of an embodiment of an aeration system for use in the invention.
FIGURE 10 is a side sectional view of a filtration apparatus of the third aspect of the invention.
FIGURE 11 is a bottom view, in section, taken along lines 11-11A of FIGURE 10.
FIGURE 12 is a side view of a removable aerator for use in the third aspect of the invention.
FIGURE 13 is a side view, in section, of a means of removably attaching a removable aerator to a pressure vessel.
FIGURE 14A is a bottom sectional view showing the insertion of an embodiment of a branched removable aerator into a pressure vessel in accordance with the invention.
FIGURE 14B is a bottom sectional view showing the branched removable aerator of FIGURE 14A when fully inserted into a pressure vessel.

### Detailed Description of the Invention

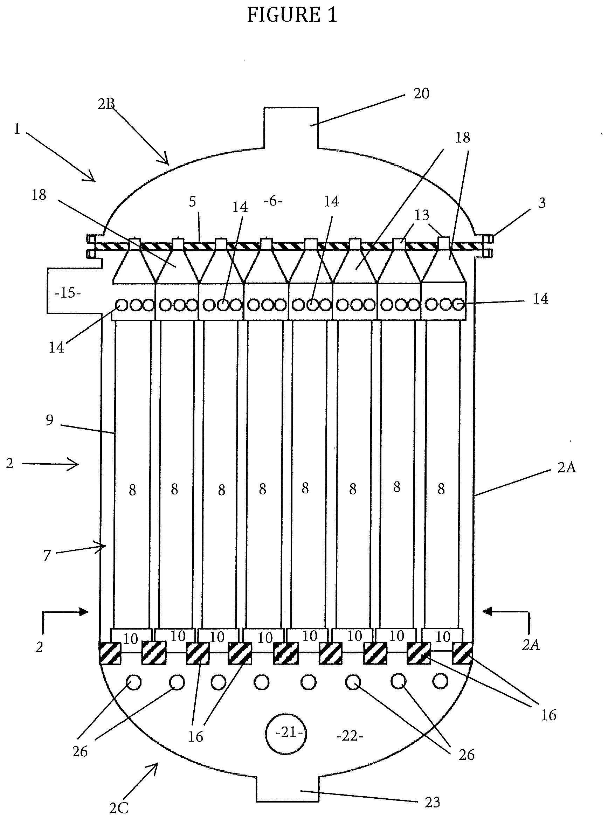

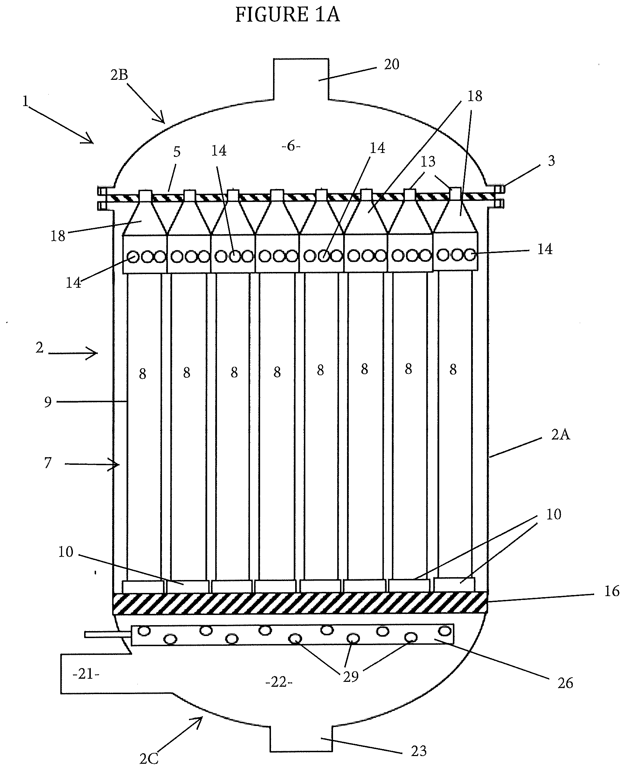

Turning to Figures 1 and 1A, multi-element filtration apparatus **1** includes pressure vessel **2,** illustrated in cross-section, and formed of a central section **2A** and upper and lower sections **2B** and **2C.** In the present invention, the pressure vessel is cylindrical and suitable for operation with inside pressures exceeding at least two bars above the outside pressure. As shown, upper section **2B** is mounted to central section **2A** via flange joint **3,** and lower section **2C** is mounted to or integral with central section **2A.** Upper support **5** is mounted within pressure vessel **2** to provide support and alignment for filtration elements **8** and to separate upper chamber **6** from main chamber **7.** In the embodiment shown, the periphery of upper support **5** is clamped and sealed between the central and upper sections **2**A and **2B** of pressure vessel **2** at the region of flange joint **3.** Lower section **2C** and central section **2A** can be similarly clamped and sealed. Feed inlet port **21** permits a feed fluid to be introduced into main chamber **7** (as shown, at a level below the level of bottom ends **10** of filtration elements **8**) for filtration within filtration apparatus **1.**

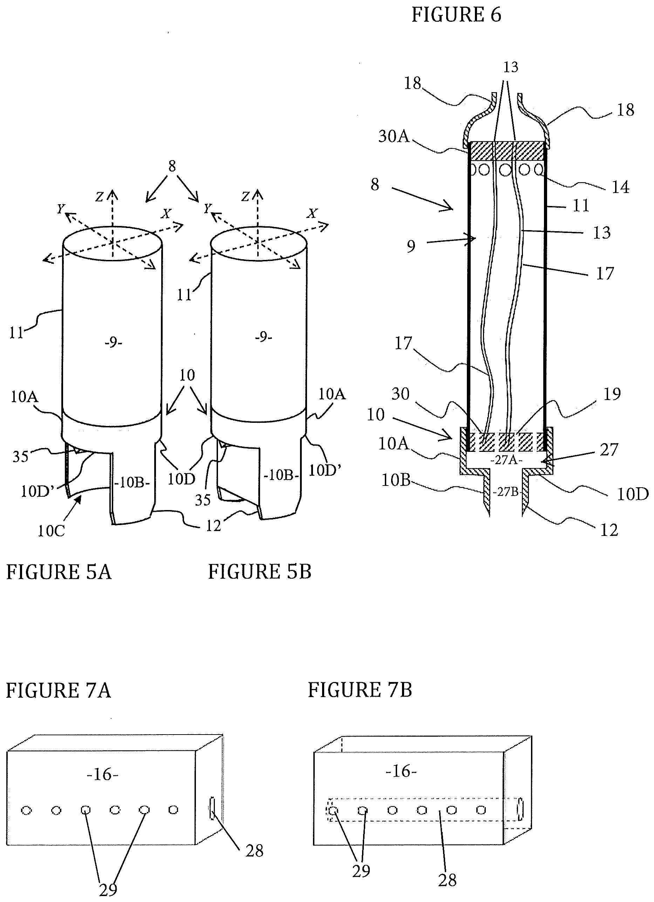

In Figures 1 and 1A, multiple filtration elements **8** are located within main chamber **7,** engaged with upper support **5,** and are supported by a first set of multiple spaced beams **16.** The multiple filtration elements generally include a body portion **9** defined by tubular shell **11** (as shown in Figures 5 and 6), a top end **18** and a bottom end **10.** One or more filtration membranes such as hollow fiber membranes **17** (Figure 6) reside within body portion **9.** The filtration membranes are affixed at or near top end **18** and at or near bottom end **10,** typically via tube sheets **30** and **30A** (Figure 6) or in another suitable manner adapted for the specific type of filtration membrane.

Each filtration membrane may be, for example, a microfiltration membrane, ultrafiltration membrane, a nanofiltration membrane or a reverse osmosis membrane. Filtration apparatus **1** may contain, for example, 2 to 150 or more filtration elements **8,** with 40 to 75 being an especially useful number of elements for many applications. In other preferred embodiments, the number of filtration elements **8** within a pressure vessel **2** may be selected from 55, 61, 73, 85, 91, 97, 119, or 131. In a preferred embodiment, the filtration membranes take the form of hollow fiber membranes **17** (Figure 6), but they can be spiral wound or have other configurations if desired.

One or more bottom through-holes **19** (Figures 5 and 6) through tube sheet **30** permit the feed fluid and aeration gas to enter body portion **9** through bottom end **10.** The feed fluid is separated into a permeate and a concentrate (or reject) by passing through filtration membrane(s) such as hollow fiber membranes **17** in (shown in Figure 6) residing within body portion **9.**

Top ends **18** are adapted to keep the permeate and concentrate separate so they can be removed separately from filtration elements **8** and pressure vessel **2.** Hollow fiber membranes **17** preferably are operated in an outside-in manner, in which the feed fluid is fed to the outside of the hollow fiber membranes **17** and permeate passes to the interior lumens **13** of hollow fiber membranes **17.** In the embodiment shown in Figure 6, hollow fiber membranes **17** penetrate through tube sheet **30A,** allowing permeate to leave body portion **9** of filtration elements **8** through lumens **13** of hollow fiber membranes **17** and flow into upper chamber **6.** When other membrane configurations are used, through-holes are provided at top end **18** of filtration elements **8** to discharge permeate into upper chamber **6.** Fluid is removed from upper chamber **6** via a discharge port such as upper discharge port **20.**

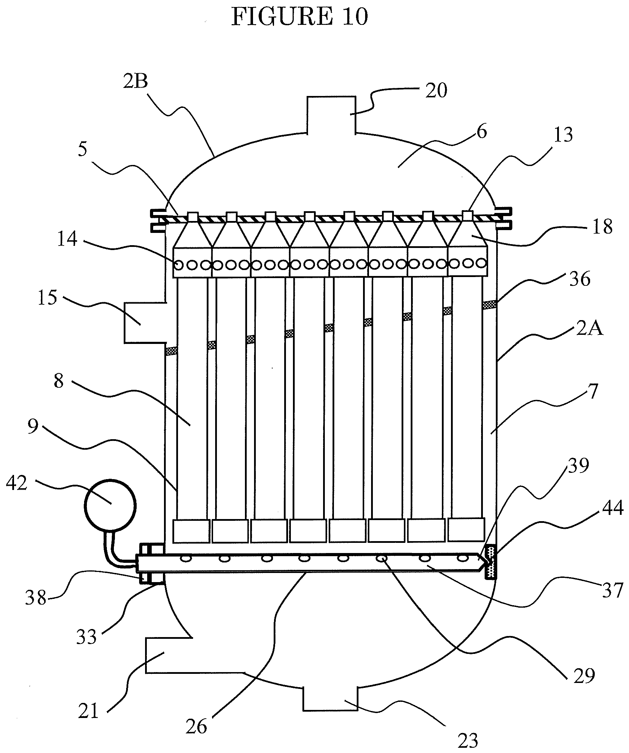

Similarly, discharge openings **14** allow concentrate to leave body portion **9** of filtration elements **8** and be discharged into main chamber **7.** Fluid is removed from main chamber **7** via a discharge port such as discharge port **15.** The discharge port can also be near the middle or the lower part of main chamber **7.** A canted plate such as canted plate **36** of Figure 10 may be provided to direct concentrate to upper discharge port **15** and to avoid mixing concentrate with feed fluid within lower portions of main chamber **7.** If present, canted plate **36** is provided with openings to allow filtration elements **8** to pass through, and in such a case, canted plate **36** can also perform an alignment and/or support function.

Aeration gas (usually air) typically vents from filtration elements **8** with the concentrate and is vented from pressure vessel **2** from a suitable vent (not shown) or through a concentrate discharge port through which the concentrate is removed from pressure vessel **2.**

Top ends **18** of filtration elements **8** are generally adapted to engage with openings in upper support plate **5** to form a seal and, via lumens **13** or other through-holes, provide one or more fluid flow paths through upper support plate **5** into upper chamber **6.** Top ends **18** may include a cap or connector that is affixed to tubular shell **11** mechanically (*e.g.*, by threads promoting a radial or axial O-ring seal), by use of suitable adhesives, or otherwise, in such a manner as to produce a seal between the cap or connector and tubular shell **11.**

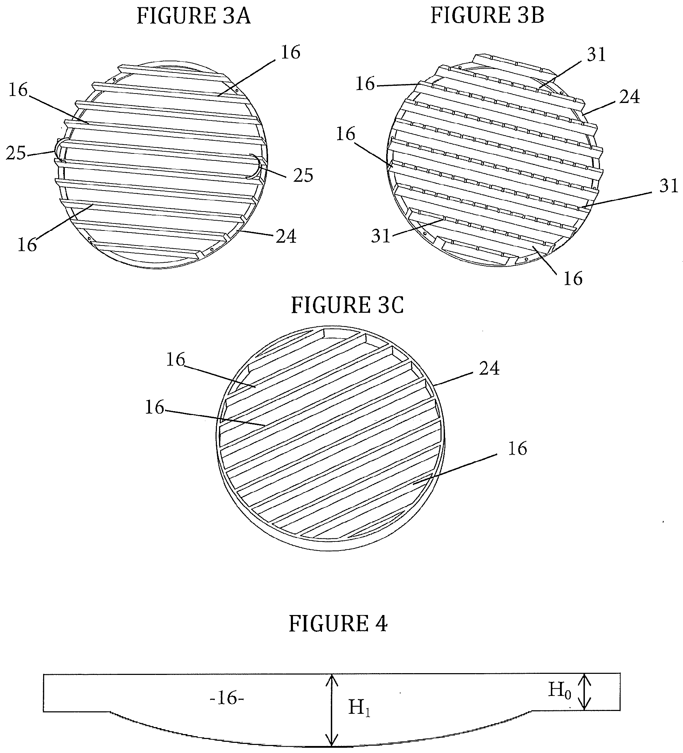

A first set of multiple spaced beams **16** are mounted onto an interior surface of pressure vessel **2.** The spaced beams **16** can be mounted on a ridge or other mechanical support structure within pressure vessel **2.** The spaced beams **16** can be mounted permanently, such as by an adhesive or through welding them into place, or they may be mounted in a removable manner. The spaced beams **16** preferably are arranged parallel to each other, but non-parallel arrangements may be useful for particular arrangements of filtration elements **8** within pressure vessel **2.** The spaced beams **16** can be individually mounted within pressure vessel **2** or may be assembled into an alignment structure such as the peripheral supports **24** shown in Figures 3A, 3B, and 3C. The alignment structure can align and hold beams **16** together, creating a unitary structure.

Spaced beams **16** can have any convenient cross-sectional geometry provided the beams engage with bottom ends **10** of filtration elements **8** as described herein. A simple rectangular cross-section is entirely suitable, although spaced beams **16** can have alternative cross-sectional geometries such as squares, triangles, trapezoids, hexagons, other regular or irregular polygons, I-beams and circles. The cross-section of any beam **16** may vary along its length as shown, for example, in Figure 4 where beam **16** has a greater height (H₁) in the middle than at the ends (H₀). The various beams **16** do not all need to have the same geometry or dimensions. For example, beams **16** that pass close to the center of pressure vessel **2** are longer and generally bear more weight and for that reason may be made thicker and/or taller than other beams **16** that are positioned nearer to the sides of pressure vessel **2.** Longer beams may be reinforced or supported in some manner to accommodate a greater load. It is also possible to use different materials of construction for the various beams **16** to accommodate their respective loads.

The materials of construction of spaced beams **16** are selected to meet their mechanical requirements. Examples of suitable materials of construction include metals such as steel, stainless steel, aluminum or magnesium, polymers (such as polyvinyl chloride, a polyester or a polyolefin) and reinforced organic polymers such as fiber-reinforced thermoplastic or thermoset resins. To avoid corrosion, metal materials may be encapsulated within a polymeric coating. A preferred material for at least the longer center beams is a fiber-reinforced thermoplastic or thermoset resin.

Bottom ends **10** of filtration elements **8** each are adapted to rest upon an adjacent pair of beams **16** and to extend downwardly between those adjacent beams **16.** The spacing of each adjacent pair of beams **16** preferably is chosen in conjunction with the geometry of bottom ends **10** of filtration elements **8** so that bottom ends **10** fit snugly within the space between adjacent beams **16.**

As illustrated in Figures 5A and 5B, the lower section 10B of bottom ends **10** may be tapered inwardly to facilitate positioning and alignment between beams **16.** Preferably, the taper makes an angle of between 15 and 75 degrees, more preferably between 30 and 60 degrees, with the vertical in the X-Z plane, where X is the direction from shoulder 10D to opposing shoulder 10D'.

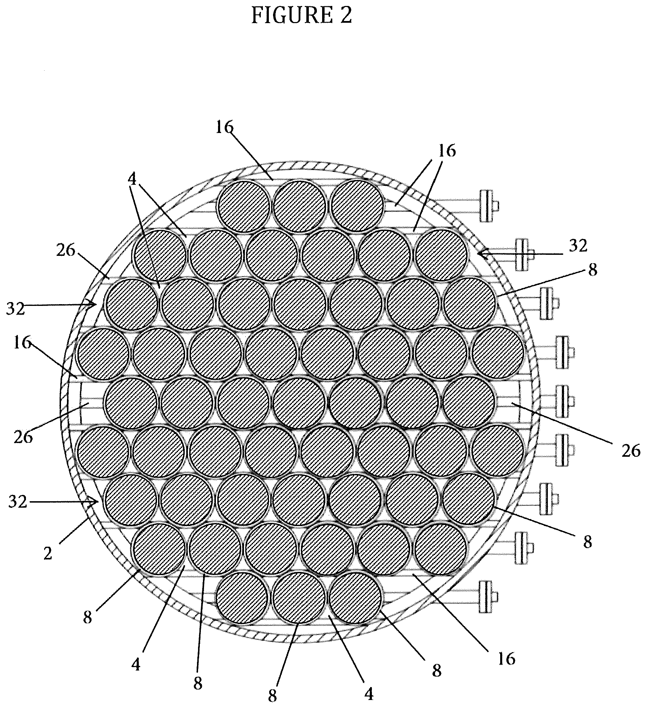

The filtration elements **8** can be arranged within pressure vessel **2** in any convenient manner. They may be arranged in an array or other defined pattern, or randomly. In a preferred embodiment such as is shown in Figure 2, the filtration elements **8** are arranged in a hexagonal close packing arrangement, as this enables facile support of each row **32** (Figure 2) of multiple filtration elements **8** by two adjacent spaced beams **16.** With elements arranged in hexagonal close packing, adjacent parallel rows **32** of multiple filtration elements **8** can be supported by a common beam **16** and the adjacent beams **16** on either side of the common beam **16.**

Optional positioning elements such as brackets **25** in Figure 3A and alignment notches **31** in Figure 3B may be incorporated or affixed to beams **16** to align filtration elements **8** and prevent them from moving in the direction of beams **16** *i.e.,* along the space defined by the two adjacent beams **16** on which the particular filtration element **8** rests. In preferred embodiments, beams **16** and bottom ends **10** of filtration elements **8** have corresponding positioning elements that engage and/or otherwise mate with each other to align filtration elements **8** into a fixed position relative to the beams **16** to which it engages. For example, embodiments illustrated in Figures 5A and 5B illustrate that shoulders **10D** may include canted downward protrusions adapted to engage with notches **31** of beams **16** (Figure 3B). Such a canted downward protrusion may form an angle of between 15 and 75 degrees, more preferably between 30 and 60 degrees, with the beam direction *Y* and a vertical Z of the corresponding filtration element **8.**

When positioned within pressure vessel **2,** bottom ends **10** of filtration elements **8** by themselves or together with the two adjacent beams **16** define a cavity such as cavity **27** of Figure 6. Cavity **27** provides a fluid path for feed fluid and a gas supplied by aerators **26** to travel upwardly through cavity **27** to one or more through-holes **19** that admit the feed fluid and aerating gas into the interior of the corresponding filtration element **8.**

Figure 5A illustrates a bottom end **10** of filtration element **8** adapted to define such a cavity by itself. Bottom end **10** has an upper section **10A,** which is wider than lower section **10B,** shoulders **10D** being formed at the conjunction of upper section **10A** and lower section **10B.** Shoulders **10D** rest on adjacent beams **16,** while lower section **10B** extends downwardly between such adjacent beams **16.** Bottom end **10** defines cavity **27** (Figure 6). Cavity **27** provides significant operational advantages as much or all of the aeration gas is captured with it, from which the aeration gas percolates upwards through through-holes **19** into body portions **9** of filtration elements **8,** leading to an efficient circulation of aeration gas and feed fluid through filtration elements **8** as well as a more uniform distribution of the aeration gas between filtration elements **8.** Gas outlet holes **29** of aerator **26** in some embodiments are aligned with cavities **27** or even positioned within cavities **27** so as to permit aeration gas to flow directly into cavities **27,** further increasing the efficiency of aeration gas utilization.

In the embodiment shown in Figure 6, cavity **27** includes an upper cavity **27A** and a lower cavity **27B.** As shown, upper cavity **27A** resides above the level of beams **16** and may function as a headspace for the aeration gas provided by aerators **16.** The headspace may have a vertical extension of at least 0.5 cm or at least 1 cm, and, for example, up to 10 cm or up to 5.1 cm. Lower cavity **27B** extends between the adjacent beams.

Figure 5B illustrates a bottom end **10** adapted to form a cavity together with adjacent beams **16.** In this configuration, lower section **10B** has one or more open sides **10C.** When in place, adjacent beams **16** abut lower section **10B** on each open side, thereby producing lower cavity **27B.**

In embodiments such as shown in Figures 5A, 5B, and 6, lower section **10B** has tapered lower section **12.** During loading, an element that is approximately positioned between adjacent beams **16** can be nudged (in a direction approximately perpendicular to the beams **16**) into a more correct position through interaction of the tapered lower section **12** with a beam **16.** Tapered lower section **12** may make an angle of between 15 and 75 degrees, and more preferably between 30 and 60 degrees, with both the vertical axis (*Z*) of the element and with the element width direction (*X*). In this way, the lower section **10B** of an element is made more easily able to be positioned in place between adjacent beams **16.**

The specific design of bottom end **10** in Figures 5A, 5B and 6 is not necessary. Alternative bottom end geometries are entirely suitable provided bottom end **10** is supported by adjacent spaced beams **16** and extends downwardly between the adjacent spaced beams **16,** and the bottom end by itself or together with the adjacent beams forms a cavity **27** that provides a feed path for a feed fluid and a gas supplied by the aerator **26** to travel upwardly through cavity **27** to the through-holes **19** in the bottom end **10.**

As shown in Figure 2, filtration elements **8** are positioned along the lengths of adjacent beams **16** in such a manner that fluid passages **4,** (separate from the feed paths through cavities **27**), extend from above to below each pair of adjacent spaced beams **16** and between the bottom ends of adjacent filtration elements **8** mounted on each pair of adjacent spaced beams **16.** An advantage of this feature is that solid particles that may accumulate in main chamber **7** can pass through fluid passages **4** to lower portion **22** of main chamber **7,** from which they can be removed easily.

Optionally, a second set of multiple spaced beams is provided, being oriented at an angle to and intersecting with first set of multiple spaced beams **16** to form a grid. The grid may define openings to receive bottom ends **10** of filtration elements **8** and fluid passages **4** between filtration elements, the fluid passages 4 extending from above to below multiple spaced beams **16** (as well as from above to below the second set of multiple spaced beams). Such a grid pattern may contribute added mechanical strength as well as serve as positioning means for the bottom ends **10** of filtration elements **8.**

Aerators **26** are provided to supply an aeration gas to bottom ends **10** of multiple filtration elements **8.** By "aerator" it is meant any device that produces gas bubbles when an aeration gas is flowed into the aerator and out into lower portion **22.** A gas sparger or other device with small openings (such as gas outlet holes **29** in Figures 1A and 7) that cause bubbles to form is entirely suitable. The openings preferably have dimensions of at least 0.25 mm, at least 0.5 mm or at least 1 mm and up to 10 mm, up to 7.5, up to 5 mm, or up to 4 mm. The aeration gas may be air, oxygen, nitrogen, helium, argon or other material that is gaseous at standard temperature and pressure, or a mixture of any two or more of such gasses.

Aerators **26** are positioned below and/or within cavities **27** so gas bubbles emitted by aerators **26** are captured within cavities **27** and transported with feed fluid through bottom through-holes **19** and into filtration elements **8.** Aerators **26** may be aligned under rows **32** of filtration elements **8** positioned between adjacent pairs of beams **16,** as shown in Figures 1 and 2; in such a case aerators **26** may be aligned generally parallel to and between each adjacent pair of beams **16.** Gas outlet holes **29** (such as illustrated in Figures 1A and 7) in aerators **26** may be positioned directly beneath or within cavities **27** so gas bubbles emitted from aerators **26** are directed into cavity **27.** These gas outlet holes **29** may be directed upward, downward, or at an angle to a side of the aerator **26.**

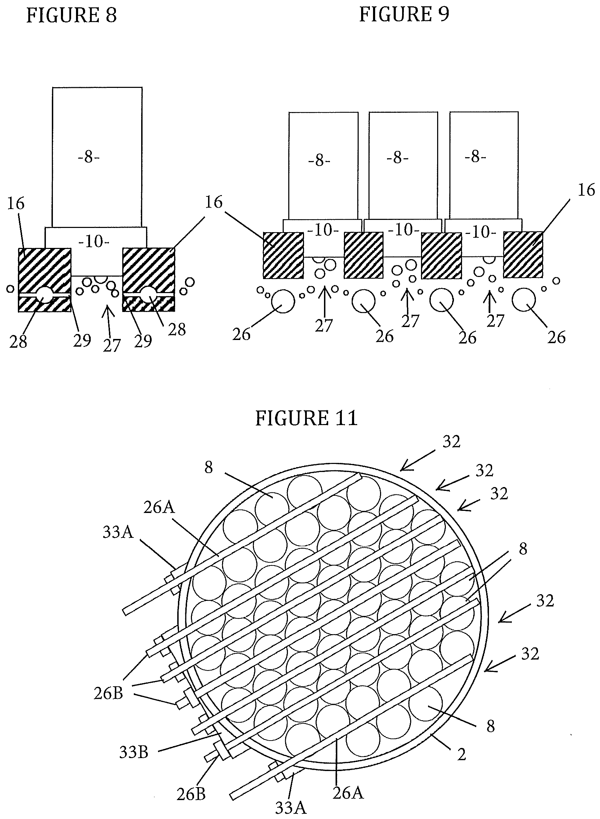

Optionally, one or more aerators **26** are positioned below the spaced beams **16** and each aerator **26** provides air bubbles to the cavities **27** of two adjacent rows **32** of filtration elements **8,** as shown in Figure 9. Preferably, holes in one or more aerators **26** are arranged so that all, or at least 50% or at least 90%, of the aeration gas that is released into the pressure vessel accumulates within cavities **27,** especially upper cavities **27A** (Figure 6) before entering the corresponding filtration element **8** through one or more through-hole(s) **19.**

Aerators **26** may be consolidated with or incorporated into multiple beams **16** (or a second set of multiple beams, if present) as shown, for example, in Figures 7A, 7B and 8. In Figures 7A, 7B and 8, beam **16** includes longitudinal channel **28** through which an aeration gas is supplied to gas outlet holes **29.** An aeration gas supplied to beam **16** passes through longitudinal channel **28** and is delivered to gas outlet holes **29,** from which (Figure 8) the aeration gas passes into cavity **27** formed by bottom end **10** of filtration element **8,** or by bottom end **10** of filtration element **8** and adjacent beams **16.**

In another embodiment, aerators **26** may be attached to sidewalls of beams **16.**

A preferred system of aerators **26** includes a plurality of parallel elongated tubes **40** arranged below the filtration elements, such as the arrangement shown in Figures 1 and 2. Preferably, each such elongated tube **40** is arranged parallel to a row **32** of filtration elements **8** and at an angle of approximately 0° or 60° to beams **16.**

In the third aspect of the invention, aerators **26** are removably mounted within pressure vessel **2.** Preferably, each aerator **26** is removable from and reinsertable into pressure vessel **2** for cleaning, replacement or other maintenance, without a need to remove any filtration element **8** from pressure vessel **2.** In a particular embodiment, removable aerators **26** are mounted onto protrusions **33** (Figures 10-14) provided on the outer surface of pressure vessel **2.** An opening **34** extends through protrusion **33** and pressure vessel **2** for inserting aerator **26** through protrusion **33** and into lower portion **22** of main chamber **7.** Protrusion **33** may be or include a flange, which may, for example, present a flat face for mating with one or more aerators **26.** A single protrusion such as protrusion **33B** in Figure 11 may serve to mount multiple aerators **26** if desired.

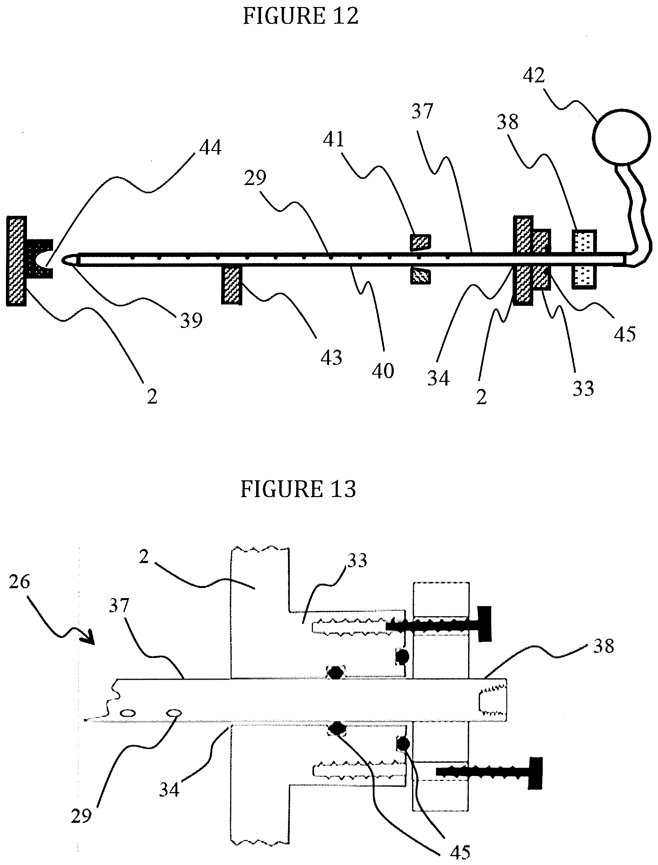

Removable aerators **26** are sealably mounted onto protrusion **33,** via an attachment means (which may be mechanical or otherwise, such as a nut-and-bolt assembly, a sealing plate, various types of clamping devices and the like) that allows for detachment and reattachment. Preferably, one or more non-permanent and replaceable sealing means such as axial and radial seals **45** (Figure 13) are formed between pressure vessel **2** and aerator **26.** Non-limiting examples of sealing means include O-rings, gaskets, and stoppers.

Removable aerators **26** may include a section **38** that is exterior of pressure vessel **2,** and another section **37** having gas outlet holes **29** that extends into the interior of pressure vessel **2.** The entire inner section is adapted to fit through opening **34** for insertion and removal. Removable aerators **26** preferably are closed at distal end **39.** Removable aerators **26** preferably also include a releasable connection for engaging and sealing to an external gas source, potentially via a manifold **42** (Figures 10 and 12). Manifold **42** may be used to connect multiple aerators **26** the external gas source.

In one embodiment, removable aerators **26** may comprise an elongated pipe **40** which is generally self-supporting as it extends across the pressure vessel **2.** The distal end **39** of removable aerator **26** is located on an opposite side of lower chamber **7** from opening **34,** and is preferably near the opposing pressure vessel wall. One or more additional supports for removable aerator(s) **26** may be provided within pressure vessel **2** to maintain the desired alignment and/or to provide mechanical support to prevent sagging, bending, or unwanted motion during operation. For instance, a removable aerator **26** may be supported at both sides of lower chamber **7.** In one embodiment, removable aerator **26** may have a sealed end that engages with a positioner (such as a distal constraint **44** in Figure 12) located on (or near) pressure vessel **2** and at a position opposite opening **34.** Distal end **39** may be tapered to facilitate alignment and engaging with distal constraint **44** to position aerator **26** correctly. One or more aerator supports **43** may be located within lower chamber **7** (and away from the pressure vessel walls). Alignment jigs **41** (Figure 12) may interact with removable aerator **26** to constrict its motion along a path and facilitate positioning removable aerator **26** within lower chamber **7.**

Aerators **26** of the first aspect of the invention may be removable and reinsertable as described herein.

A removable aerator may be used to best advantage when the pressure vessel contains a plurality of filtration elements **8** arranged in row **32,** and removable aerators **26** extend parallel to the rows. In some embodiments, some or all of removable aerators **26** are located below one or more rows **32** of filtration elements **8,** and gas outlet holes **29** are arranged to be positioned under each individual filtration element **8** in the corresponding row **32.** One or more removable aerators **26** may be located between two adjacent rows **32** of filtration elements **8,** the gas outlet holes **29** being arranged to provide air to elements in the two adjacent rows **32** on each side of that aerator. Both of these configurations are illustrated in Figure 11, wherein removable aerators **26A** are located between two adjacent rows **32** of filtration elements **8** and removable aerators **26B** each are positioned below a row **32** of filtration elements **8.**

Each removable aerator **26** advantageously services a similar number of elements. Preferably, multiple removable aerators **26** extend into pressure vessel **2** and no aerator services more than 50% more, more preferably more than 25% more, elements than any other removable aerator **26** in pressure vessel 2.

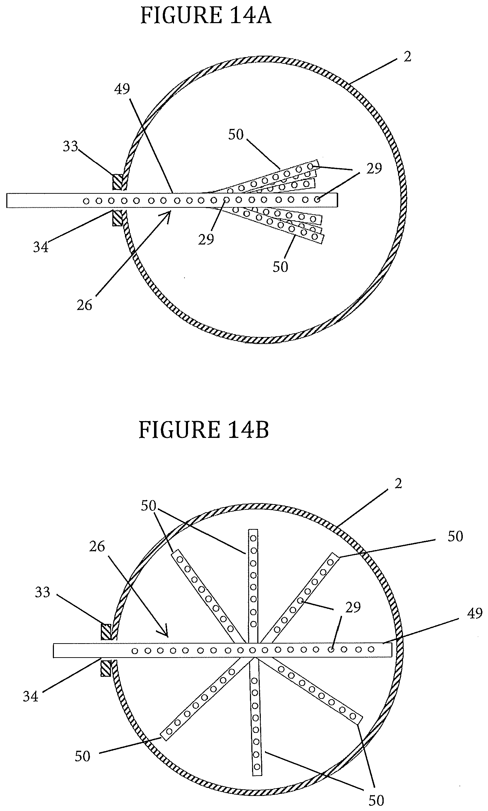

Aerators **26** may be linear or branched. In embodiments in which aerators **26** are removable and branched, the branches preferably are attached to a linear main section and can be bent (if flexible) or otherwise folded (if mounted via one or more joints or other moveable connections) toward the linear main section for insertion and removal, as shown in Figures 14A and 14B. Thus, for example, a branched removable aerator **26** may have a fishbone or umbrella type of assembly, in which the branches are foldable toward a linear main section for insertion into and removal from pressure vessel **2.** In the embodiment shown in Figures 14A and 14B, removable aerator **26** includes linear main section **49.** Branches **50** are pivotably mounted onto main section **49.** During insertion, branches **50** are folded so they closely align with linear main section **49,** so removable aerator **26** can be inserted through opening **34** in protrusion **33** and pressure vessel **2.** As shown in Figure 14B, after insertion branches **50** then are extended outwardly to create a two- or three-dimensional branched structure within pressure vessel **2.** Branches **50** then are inwardly foldable toward linear main section **49** for removal of removable aerator **26** from pressure vessel **2** through opening **34.**

It is not necessary to use removable aerators **26** together with spaced beams as in the first aspect of this invention. Removable aerators **26** can, if desired, be used in conjunction with a conventional lower support in the form of a perforated plate, or which lack a lower support for filtration elements **8.**

Multi-element filtration apparatus **1** may further include various auxiliary apparatus such as pumps, valves, seals, instrumentation, piping, ductwork and the like as may be desirable or useful. An intermediate barrier such as a canted plate with holes **36** for filtration elements **8** may be provided within main chamber **7** to direct concentrate to discharge port **15,** thereby preventing or reducing intermingling with the feed fluid.

During operation, a feed fluid is introduced into pressure vessel **2** of multi-element filtration apparatus **1** via feed inlet port **21.** Pressure vessel **2** is filled at least to the level of bottom ends **10** so feed fluid enters filtration elements **8** through cavities **27** in bottom ends **10** and passes through through-holes **19** to enter into the interior portions of filtration elements **8.** An aeration supply system (not shown) supplies pressurized gas to aerators **26.** The aeration gas bubbles upward through cavities **27** and through-holes **19** to enter filtration elements **8.**

Upon entering interior portions of filtration elements **8,** aeration gas and feed fluid travel upward through filtration elements **8,** coming into contact with the filtration membranes, where the feed fluid is separated into a permeate that passes through the membrane and a concentrate or reject that includes some portion of the feed fluid and one or more materials that are rejected by the membrane and are thus prevented from passing through it. The permeate and concentrate are taken separately from at or near top ends **18** of filtration elements **8.** In the embodiment shown in Figure 1, for example, permeate can be withdrawn from filtration elements **8** through lumens **13,** that extend through tube sheet **30A** (Figure 6), collected in upper chamber **6** of pressure vessel **2,** and removed via upper discharge port **20.** Concentrate and aeration gas are discharged from filtration elements **8** through discharge openings **14,** with concentrate being removed from pressure vessel **2** via discharge port **15.** Aeration gas can be vented through discharge port **15** or a separate air vent (not shown).

In the case of hollow fiber membranes operated in an outside-in manner, the aeration gas and feed fluid are supplied to and contacted with the exterior surfaces of the hollow fiber membranes **17.** A portion of the fluid passes through the hollow fiber membranes **17** and into their respective lumens to produce the permeate, the concentrate in that case being that portion of the feed fluid that does not pass through and into the hollow fibers.

Particulate matter that accumulates within main chamber **7** falls under force of gravity to the bottom of main chamber **7,** where it passes through fluid passages **4** into lower portion **22** of main chamber **7.** Particulate matter accumulating in lower portion **22** of main chamber **7** is easily removed, such as, for example, by taking a purge stream out of pressure vessel **2,** such as via bottom drain **23.** Particulate matter may include, for example, solid material that has accumulated on the membrane surface and has been removed, solid materials carried in with the feed fluid; solids materials that may precipitate during the filtration process or otherwise within pressure vessel **2;** biological matter such as algae, bacterial colonies, mold and the like that may grow within pressure vessel **2;** rust particles, scale, and the like. The ability to remove this particulate matter is an important advantage of the first aspect of this invention.

The multi-element filtration apparatus of the invention is useful for filtering a wide variety of fluids, especially aqueous fluids such as groundwater, surface water, seawater, process streams from chemical operations and/or power generating stations, as well as many others. In a particular embodiment, the multi-element filtration apparatus is a seawater ultrafiltration and/or microfiltration apparatus, and can be used, for example, as a prefilter for preparing seawater for reverse osmosis to produce potable water.

## Claims

1. A multi-element filtration apparatus (1), the apparatus comprising
a) a pressure vessel (2) wherein the pressure vessel is cylindrical and suitable for operation with inside pressures exceeding at least two bars, 20,000 Pa, above an outside pressure;
b) multiple filtration elements (8), each containing at least one filtration membrane (17) in an interior portion thereof, the multiple filtration elements being disposed substantially vertically within the pressure vessel, the multiple filtration elements each having a bottom end (10) having one or more through-holes (19) that admit a fluid into the interior portion of the filtration element;
c) one or more aerators (26) within the pressure vessel for supplying an aeration gas to the bottom ends of the multiple filtration elements;
d) a first set of multiple spaced beams (16) mounted on an interior surface of the pressure vessel, the first set of multiple spaced beams being engaged with the bottom ends of the multiple filtration elements such that i) each of the bottom ends is supported by two adjacent spaced beams and extends downwardly between said two adjacent spaced beams, each bottom end by itself or together with the two adjacent spaced beams defining a cavity (27) that provides a feed fluid path for a feed fluid and a gas supplied by the aerator(s) to travel upwardly through the cavity to the through-holes in the bottom end, and ii) fluid passages, separate from the feed fluid paths, extend from above to below each pair of adjacent spaced beams and between the bottom end caps of adjacent filtration elements mounted on each pair of adjacent spaced beams.

2. The multi-element filtration apparatus of claim 1, wherein each bottom end comprises an upper portion that resides above the adjacent spaced beams and a lower portion that extends downwardly between the two adjacent spaced beams on which the bottom end is supported, wherein the upper portion defines an upper portion of the cavity that extends above the two adjacent spaced beams.

3. The multi-element filtration apparatus of claim 1 or 2 further comprising at least one upper support for aligning the multiple filtration elements.

4. The multi-element filtration apparatus of any preceding claim wherein the filtration membrane is a hollow fiber membrane (17).

5. The multi-element filtration apparatus of any preceding claim further comprising a feed inlet port for introducing a feed fluid into the pressure vessel; a permeate discharge port for discharging from the pressure vessel a permeate produced by the multiple filtration elements, and a concentrate discharge port (14, 15) for discharging from the pressure vessel a concentrate produced by the multiple filtration elements.

6. The multi-element filtration apparatus of any preceding claim wherein the first set of multiple spaced beams is mounted onto an alignment structure that aligns beams and forms a unitary structure.

7. The multi-element filtration apparatus of any preceding claim further comprising positioning elements (25) for engaging with and positioning the multiple filtration elements in a fixed position on the first set of multiple spaced beams.

8. The multi-element filtration apparatus of any preceding claim 1 wherein the one or more aerators are integrated with the first set of multiple spaced beams such that an aeration gas is supplied to the cavities through gas outlets in the first set of multiple spaced beams.

9. The multi-element filtration apparatus of any preceding claim wherein the one or more aerators are removable aerators.

## Patentansprüche

1. Mehrelement-Filtrationseinrichtung (1), wobei die Einrichtung Folgendes umfasst
a) einen Druckbehälter (2), wobei der Druckbehälter zylindrisch ist und für einen Betrieb mit Innendrücken geeignet ist, die mindestens zwei Bar, 20.000 Pa, über einem Außendruck liegen;
b) mehrere Filtrationselemente (8), die jeweils mindestens eine Filtrationsmembran (17) in ihrem Innenabschnitt enthalten, wobei die mehreren Filtrationselemente im Wesentlichen vertikal innerhalb des Druckbehälters angeordnet sind und jedes Filtrationselement ein unteres Ende (10) mit einem oder mehreren Durchgangslöchern (19) aufweist, durch die ein Fluid in den Innenabschnitt des Filtrationselements einströmen kann;
c) einen oder mehrere Belüfter (26) innerhalb des Druckbehälters zum Zuführen eines Belüftungsgases zu den unteren Enden der mehreren Filtrationselemente;
d) einen ersten Satz mehrerer beabstandeter Träger (16), die an einer Innenfläche des Druckbehälters montiert sind, wobei der erste Satz mehrerer beabstandeter Träger mit den unteren Enden der mehreren Filtrationselemente so in Eingriff steht, dass i) jedes der unteren Enden von zwei benachbarten beabstandeten Trägern getragen wird und sich zwischen diesen beiden benachbarten beabstandeten Trägern nach unten erstreckt, wobei jedes untere Ende allein oder zusammen mit den beiden benachbarten beabstandeten Trägern einen Hohlraum (27) definiert, der einen Beschickungsfluidweg für ein Beschickungsfluid und ein vom Belüfter zugeführtes Gas bereitstellt, um durch den Hohlraum nach oben zu den Durchgangslöchern im unteren Ende zu gelangen, und ii) Fluidkanäle, die von den Beschickungsfluidwegen getrennt sind, sich von oberhalb nach unterhalb jedes Paares benachbarter beabstandeter Träger und zwischen den unteren Endkappen benachbarter Filtrationselemente erstrecken, die auf jedem Paar benachbarter beabstandeter Träger montiert sind.

2. Mehrelement-Filtrationseinrichtung nach Anspruch 1, wobei jedes untere Ende einen oberen Abschnitt, der sich oberhalb der benachbarten beabstandeten Träger befindet, und einen unteren Abschnitt umfasst, der sich zwischen den beiden benachbarten beabstandeten Trägern, von denen das untere Ende getragen wird, nach unten erstreckt, wobei der obere Abschnitt einen oberen Abschnitt des Hohlraums definiert, der sich oberhalb der beiden benachbarten beabstandeten Träger erstreckt.

3. Mehrelement-Filtrationseinrichtung nach Anspruch 1 oder 2, ferner umfassend mindestens eine obere Halterung zum Ausrichten der mehreren Filtrationselemente.

4. Mehrelement-Filtrationseinrichtung nach einem vorstehenden Anspruch, wobei die Filtrationsmembran eine Hohlfasermembran (17) ist.

5. Mehrelement-Filtrationseinrichtung nach einem vorstehenden Anspruch, ferner umfassend einen Beschickungseinleitungsanschluss zum Einleiten eines Beschickungsfluids in den Druckbehälter, einen Permeat-Ausleitungsanschluss zum Ausleiten des von den Mehrelement-Filtrationselementen erzeugten Permeats aus dem Druckbehälter, und einen Konzentratausleitungsanschluss (14, 15) zum Ausleiten des von den Mehrelement-Filtrationselementen erzeugten Konzentrats aus dem Druckbehälter.

6. Mehrelement-Filtrationseinrichtung nach einem vorstehenden Anspruch, wobei der erste Satz mehrerer beabstandeter Träger auf einer Ausrichtungsstruktur montiert ist, die die Träger ausrichtet und eine einheitliche Struktur bildet.

7. Mehrelement-Filtrationseinrichtung nach einem vorstehenden Anspruch, ferner umfassend Positionierelemente (25) zum Eingriff mit und Positionieren der mehreren Filtrationselemente in einer festen Position auf dem ersten Satz von mehreren beabstandeten Trägern.

8. Mehrelement-Filtrationseinrichtung nach einem vorstehenden Anspruch 1, wobei der oder die Belüfter mit dem ersten Satz von mehreren beabstandeten Trägern so integriert sind, dass ein Belüftungsgas durch Gasauslässe im ersten Satz von mehreren beabstandeten Trägern den Hohlräumen zugeführt wird.

9. Mehrelement-Filtrationseinrichtung nach einem vorstehenden Anspruch, wobei der eine oder die mehreren Belüfter abnehmbare Belüfter sind.

## Revendications

1. Appareil de filtration multi-éléments (1), l'appareil comprenant
a) un récipient sous pression (2) dans lequel le récipient sous pression est cylindrique et adapté à un fonctionnement avec des pressions intérieures dépassant au moins deux bars, 20 000 Pa, au-dessus d'une pression extérieure ;
b) plusieurs éléments de filtration (8), contenant chacun au moins une membrane de filtration (17) dans une partie intérieure de ceux-ci, les éléments de filtration multiples étant disposés sensiblement verticalement à l'intérieur du récipient sous pression, chaque élément de filtration multiple présentant une extrémité inférieure (10) comportant un ou plusieurs trous traversants (19) qui admettent un fluide dans la partie intérieure de l'élément de filtration ;
c) un ou plusieurs aérateurs (26) à l'intérieur du récipient sous pression pour fournir un gaz d'aération aux extrémités inférieures des multiples éléments de filtration ;
d) un premier ensemble de multiples poutres espacées (16) montées sur une surface intérieure du récipient sous pression, ce premier ensemble de multiples poutres espacées étant mis en prise avec les extrémités inférieures des éléments de filtration multiples de sorte que i) chaque extrémité inférieure est supportée par deux poutres espacées adjacentes et s'étend vers le bas entre lesdites deux poutres espacées adjacentes, chaque extrémité inférieure seule ou avec les deux poutres espacées adjacentes définissant une cavité (27) qui fournit un chemin de fluide d'alimentation pour un fluide d'alimentation et un gaz fournis par le(s) aérateur(s) pour circuler vers le haut à travers la cavité jusqu'aux trous traversants dans l'extrémité inférieure, et ii) des passages de fluide, séparés des chemins de fluide d'alimentation, s'étendent du haut vers le bas de chaque paire de poutres espacées adjacentes et entre les capuchons d'extrémité inférieure des éléments de filtration adjacents montés sur chaque paire de poutres espacées adjacentes.

2. Appareil de filtration multi-éléments selon la revendication 1, dans lequel chaque extrémité inférieure comprend une partie supérieure qui se trouve au-dessus des poutres espacées adjacentes et une partie inférieure qui s'étend vers le bas entre les deux poutres espacées adjacentes sur lesquelles l'extrémité inférieure est supportée, dans lequel la partie supérieure définit une partie supérieure de la cavité qui s'étend au-dessus des deux poutres espacées adjacentes.

3. Appareil de filtration multi-éléments selon la revendication 1 ou 2 comprenant en outre au moins un support supérieur pour aligner les multiples éléments de filtration.

4. Appareil de filtration multi-éléments selon une quelconque revendication précédente dans lequel la membrane de filtration est une membrane à fibres creuses (17).

5. Appareil de filtration multi-éléments selon une quelconque revendication précédente comprenant en outre un orifice d'entrée d'alimentation pour introduire un fluide d'alimentation dans le récipient sous pression ; un orifice de décharge de perméat pour décharger du récipient sous pression un perméat produit par les éléments de filtration multiples, et un orifice de décharge de concentré (14, 15) pour décharger du récipient sous pression un concentré produit par les éléments de filtration multiples.

6. Appareil de filtration multi-éléments selon une quelconque revendication précédente, dans lequel le premier ensemble de poutres espacées multiples est monté sur une structure d'alignement qui aligne les poutres et forme une structure unitaire.

7. Appareil de filtration multi-éléments selon une quelconque revendication précédente, comprenant en outre des éléments de positionnement (25) pour mettre en prise avec et positionner les éléments de filtration multiples dans une position fixe sur le premier ensemble de poutres espacées multiples.

8. Appareil de filtration multi-éléments selon une quelconque revendication précédente 1, dans lequel les un ou plusieurs aérateurs sont intégrés au premier ensemble de poutres espacées multiples de sorte qu'un gaz d'aération soit fourni aux cavités par des sorties de gaz dans le premier ensemble de poutres espacées multiples.

9. Appareil de filtration multi-éléments selon une quelconque revendication précédente, dans lequel le ou les plusieurs aérateurs sont des aérateurs amovibles.
